Europäisches Patentamt

(19) European Patent Office

Office européen des brevets

(11) Numéro de publication : **0 437 152 A1**

# (12) DEMANDE DE BREVET EUROPEEN

(21) Numéro de dépôt : 90420526.7

(22) Date de dépôt : 04.12.90

(51) Int. Cl.⁵ : **B32B 27/32, C08L 23/08, C09J 123/08, C08J 5/18**

(30) Priorité : 07.12.89 FR 8916317
01.02.90 FR 9001384

(43) Date de publication de la demande :
17.07.91 Bulletin 91/29

(84) Etats contractants désignés :
AT BE CH DE DK ES GB GR IT LI LU NL SE

(71) Demandeur : SOCIETE SOCAPLAST
280, Rue Richetta
F-69400 Villefranche s/Saône (FR)

(72) Inventeur : Benatre, Guy
118, Rue de la Gare
F-69400 Villefranche s/Saône (FR)

(54) Films à base de Polyéthylène et E.V.A. chargés soudables par haute fréquence, pouvant être associés par complexage ou coextrusion à d'autres films et produits obtenus.

(57)    Le film est composé d'une résine initiale de polyéthylène contenant de 8 à 18% d'E.V.A., d'une résine de polypropylène et d'une charge neutre qui permet de diminuer l'impression de collage au toucher et d'augmenter la rigidité du film sans altérer de manière significative sa soudabilité par haute fréquence. Il permet d'obtenir des articles par assemblage par soudure haute fréquence et découpe mécanique. Le film à base de résine polyéthylène et d'EVA chargée peut être associé par complexage, enduction ou coextrusion à d'autres films ou feuilles thermoplastiques ou non pour former des complexes multicouches soudables par haute fréquence.

EP 0 437 152 A1

# FILMS A BASE DE POLYETHYLENE ET E.V.A CHARGES SOUDABLES PAR HAUTE FREQUENCE, POUVANT ETRE ASSOCIES PAR COMPLEXAGE OU COEXTRUSION A D'AUTRES FILMS ET PRODUITS OBTENUS

L'invention concerne la composition, la fabrication et la transformation de films platiques à base de polyoléfines susceptibles d'être soudés par haute fréquence. Ces films peuvent être employés seuls ou en complexage avec d'autres films.

Il existe dans l'industrie de la transformation de matière plastique de nombreuses installations de fabrication de films à base de polyoléfines, notamment extrudées qui se trouvent sous employées. Ces installations servent généralement à faire de la gaine qui peut servir à l'emballage de produits de toute sorte. A titre d'exemple, une catégorie de ces extrudeuses de film comportent une fillière circulaire, à axe vertical, qui extrude un tube qui est ensuite plus ou moins gonflé et étiré à l'air, pendant sa phase de refroidissement, pour lui donner son épaisseur et ses caractéristiques mécaniques définitives. La gaine est généralement mise à plat avec ou sans soufflets pour être ensuite enroulée sur un mandrin. Les polyoléfines sont des matériaux difficiles à thermosouder parce qu'ils ont tendance à coller sur les électrodes chaudes. Il faut recourir à des artifices tels que le complexage avec d'autres films qui ont des points de fusion bien plus élevé et qui sont placés de manière à être interposés entre l'électrode chaude et le film polyoléfine servant à la soudure. Ou bien il faut recourir à la soudure par impulsion protégée par une toile de téflon. Dans les deux cas, il est rare d'obtenir des soudures esthétiques, et surtout dès que les épaisseurs de matériaux augmentent les problèmes de conduction de chaleur à travers les parois, font augmenter les temps de soudure au-delà de ce qui est économiquement raisonnable pour certaines applications. Ces inconvénients ferment aux polyoléfines de nombreuses applications de nature industrielle où l'on demande des qualités bien particulières telles que la ténacité, la tenue dans le temps, ou l'esthétique. Ces emplois industriels ont été souvent remplis par des films à base de polychlorure de vinyl plastifiés, dit ci-dessous PVC, qui présentent l'avantage d'être soudables par Haute Fréquence. En effet la soudure Haute Fréquence permet un réchauffement de la matière, dans la masse, par mise en vibration des ions chlore. Ce qui permet de souder rapidement des épaisseurs relativement importantes de matériau tout en gardant l'électrode froide qui donc ne colle pas au matériau soudé. Cette électrode de par sa conception peut comporter une arête vive qui fait une coupe mécanique, juste après la fin de la soudure en venant en contact avec la contre électrode qui sert d'enclume. L'utilisation d'un matériau relativement épais permet en outre de réaliser des états de surface par repoussage qui donnent une qualité esthétique indéniable. Le PVC, qui permet de bénéficier de tous ces avantages, a néanmoins quelques inconvénients : c'est un matériau qui peut présenter un certain nombre de risque, notamment on peut constater lors de sa combustion un dégagement d'acide chlorhydrique. C'est un matériau qui durcit en vieillissant à cause de la disparition progressive des plastifiants, et qui a sous forme de film de fortes variations de souplesse en fonction de la température, notamment à basse température où il peut même arriver à se couper. Ces problèmes gênent notamment l'emploi de ce matériau, en complexage avec d'autres films, pour la réalisation de la soudure ; on lui préfère l'emploi de polyoléfines malgré les inconvénients qu'elles présentent par l'emploi de soudure thermique ou à impulsion.

L'objet de l'invention est de réaliser des films qui présentent les mêmes avantages que le PVC au point de vue de l'aptitude à la transformation et de la qualité esthétique, tout en en n'ayant pas les inconvénients, ainsi que les avantages des films de polyoléfines en complexage avec d'autres films, sans en comporter les inconvénients à la soudure. Ces films peuvent être d'une part fabriqués sur des installations prévues pour les polyoléfines sans modifications particulières au niveau de l'extrusion, et qu'ils peuvent, d'autre part, être soudés sur des installations prévues pour les films PVC sans non plus les modifier. Cette invention permet donc de reconvertir la production d'installations industrielles sans avoir à réaliser des investissements dissuasifs. On sait depuis longtemps que les mélange de résines polyéthylène avec des résines d'éthyl-vinyl-acétate, dit ci-après E.V.A., permettent d'obtenir dans certaines proportions des produits soudables par haute fréquence. Notamment, le secteur médical utilise couramment des mélanges de polyéthylène basse densité avec 18% d'E.V.A.. On trouve ces produits dans le commerce ainsi que toute une gamme de mélanges allant de 4% d'E.V.A. à 30%. Les essais de soudure en haute fréquence montrent que l'on arrive à souder les films réalisés avec ces produits jusqu'à un taux minimum de 8% d'E.V.A.. Seulement on constate que ces propriétés n'ont pas ou que peu été utilisées pour des résines à moins de 18% d'E.V.A. parce que les défauts de ces films étaient souvent rédhibitoires. Les principaux reproches faits à ces films sont : le toucher désagréable parce qu'ils sont collants au doigt, et qu'ils sont trop souples pour des usages dans lesquels l'aspect esthétique prime ; en effet lorsqu'on cherche, par exemple, à évoquer le cuir, il faut un toucher plutôt sec et une certaine rigidité pour éviter, par exemple, les plis disgracieux. Toute la recherche, objet de l'invention, a été de retrouver avec des résines ayant de 8 à 18% d'E.V.A. un toucher sec et une rigidité, au sens décrit précédemment, suffisante pour rendre le produit acceptable dans des applications dans lesquels prime l'aspect. Cette recherche a donné lieu à toute une gamme de films dont la composition varie en fonction des applications envisagées. Etant donné le caractère plutôt subjectif de l'aspect collage au doigt ou souplesse, qui peuvent être difficilement quantifiés, les produits ont donné lieu à la mise en oeuvre de toute une batterie de moyens, objets de l'invention, qui peuvent être utilisés seuls ou en combinaison les uns avec les autres en fonction du résultat recherché. Nous allons donc décrire toute une gamme de moyens qui ont été mis en oeuvre pour obtenir les films recherchés. Un premier moyen réside dans le process d'extrusion que nous avons décrit précédemment, dans lequel on utilise une résine comportant de 8 à 18% d'E.V.A. et d'un grade le plus faible possible que nous situons dans la fourchette de 0,3 à 2 en échelle I-1 suivant la norme NF T 51016 qui caractérise la méthode de mesure du grade. La gaine ainsi fabriquée subit un étirage et un refroidissement classiques à l'air en sortie de filière, puis elle est écrasée entre des rouleaux afin de chasser l'air contenu entre les parois et d'obtenir, grâce à l'E.V.A., une adhérence, entre les parois, suffisante pour éviter un délaminage ultérieur. Dans cette première phase on recherche une première amélioration de la rigidité par blocage des molécules avant relaxation. Ce résultat est obtenu en combinant le choix du grade, le débit de l'extrudeuse en fonction de l'épaisseur retenue pour la gaine, et, enfin la hauteur de la bulle que forme la gaine entre la sortie de la filière et la zone d'écrasement de la gaine. Ensuite la gaine peut être réchauffée avant de passer entre deux cylindres dont l'un est en caoutchouc lisse et l'autre en acier avec un motif de décoration gravé pour effectuer par repoussage un décors de la surface du film. Le réchauffage de la gaine est effectué par rayonnement infrarouge de fréquence longue, dans la zone où le film est opaque à ce type de rayonnement, uniquement du côté qui doit être repoussé. Ainsi le film est réchauffé uniquement à sa surface à une température de l'ordre de 85°C et la chaleur n'a pas le temps de se transmettre à travers le film. Le fait qu'il soit constitué de deux épaisseurs de matériau crée à ce titre une barrière thermique supplémentaire. Comme le cylindre métallique est refroidi à une température de l'ordre de 10°C, on bloque ainsi toute relaxation des molécules par une sorte de trempe. Le film est alors prêt à être transformé par soudure haute fréquence et découpe. Il est évident que l'on peut si c'est nécessaire chauffer le film des deux côtés pour faire un décors de chaque côté ; ceci peut s'avérer utile dans certaines applications comme nous le préciserons plus loin. Afin d'améliorer la rigidité et diminuer le collage, on ajoute à la résine initiale, au moment de son introduction dans l'extrudeuse, une charge minérale neutre. Cette charge minérale peut être de nature variée. On peut utiliser, par exemple, du mica, de la bille de verre ou de la fibre de verre. Ces exemples n'étant pas limitatifs et ces produits pouvant être utilisés en mélange. Tous ces matériaux existent sur le marché sous forme de mélanges maîtres. Mais il existe une limite maximum de charge qu'il ne faut pas dépasser, si on ne veut pas perdre les caractéristiques de soudabilité par haute fréquence. Cette limite est variable pour chaque produit, notamment en fonction de la concentration du mélange maître lui-même. En général elle ne doit pas dépasser en extrait sec 8 à 10% de la masse de résine initiale. Dans une version préférée de l'invention, ce mélange maître contient 70% de carbonate de calcium et on peut en rajouter au maximum de l'ordre de 12% du poids de résine initiale. Il est possible aussi de charger avec du mélange maître à base de talc, mais il devient impossible de coller les deux parois de la gaine au moment de l'écrasement, si bien que l'usage de cette charge n'est possible que pour fabriquer un gaine utilisée en simple paroi. La mise en oeuvre de ces mélanges maître se fait de manière tout à fait traditionnelle, en utilisant, par exemple, des installations de coloration existantes, ce qui en fait tout l'intérêt.

Le collage de la matière au toucher peut aussi être masqué par la forme du décors obtenu par repoussage. Si le motif est suffisamment profond pour constituer une sorte de gauffrage, la surface en contact avec les doigts est uniquement celle qui sépare les motifs, et elle est suffisamment faible pour que l'on n'ait plus l'impression que "ça colle". Cette façon de procéder est surtout utilisée lorsque le matériau doit être employé sous une forme translucide et qu'il est impossible d'introduire des charges minérales qui opacifient le matériau.

Les produits ainsi obtenus sont caractérisés par une rigidité, au sens décrit précédemment, acceptable et comparable à celle obtenue avec le PVC plastifié à température ambiante mais ont de meilleures performances à basse température jusqu'à des températures de l'ordre de 40°C en dessous de 0°C. Ils gardent en effet une meilleure souplesse alors que le PVC devient fragile. En contrepartie, dès que l'on atteint des températures de l'ordre de 75°C qui correspond au point Vicat, les performances deviennent médiocre. En effet, pour certaines applications, par exemple pour les produits destinés à l'habitacle des automobiles, il faut une tenue de 22h à 70°C sans déformation avec un retrait maximum de 1%. Nous avons donc recherché à augmenter la température du point Vicat de manière à donner une marge de sécurité suffisante. Nous avons constaté qu'il était possible de mélanger à la résine initiale du Polypropylène homo ou co-polymère. Il est possible d'obtenir avec un Polypropylène de grade 2 à 7 suivant l'échelle I-2 suivant la norme NF T 51016 une miscibilité satisfaisante dans des proportions allant de 5 à 30% de la masse de résine initiale. Cette addition de Polypropylène permet ainsi de remonter le point Vicat de l'ordre de 5°C pour dépasser les 80°C. Dans une version préférée de l'invention, la résine initiale, de grade 0,3 suivant l'échelle I-1 suivant la norme NF T 51016, contient de l'ordre de 14% d'E.V.A., on lui rajoute sous forme de mélange maître environ 7% de carbonate de calcium en extrait sec, soit environ 10% de mélange maître à 70% de charge, enfin environ 10% de résine de Polypropylène de grade de l'ordre de 2 suivant l'échelle I-2 suivant la norme NF T 51016.

Une autre manière d'obtenir une augmentation du point Vicat est de remplacer le polypropylène, dans les proportions allant de 5 à 30%, par une polyoléfine greffée comprenant notamment des groupement silanes hydrolysables avec, éventuellement, présence d'un catalyseur d'hydrolyse des groupement silanes de manière à obtenir une réticulation qui augmente considérablement la viscosité à chaud sans modifier les autres propriétés.

Les films ainsi obtenus peuvent se souder sur les mêmes installations qui servent à souder, les films en PVC plastifié, par haute fréquence, et permettent de produire des articles à bases de feuilles découpées et soudées semblables à ceux qui sont faits actuellement en PVC. En effet, comme nous l'avons dit, la soudure haute fréquence permet une meilleure productivité et une meilleure fiabilité que la soudure thermique et que la soudure à impulsion ; elle permet notamment de réaliser par exemple des soudures autres que des soudures rectilignes dans de très bonnes conditions. Nous allons maintenant décrire les films et les moyens à mettre en oeuvre, découlant de la présente invention, qui permettent d'élargir les applications de la soudure haute fréquence. Un certain nombre d'applications concerne des films de forte épaisseur ou bien exige une grande régularité dans les épaisseurs qu'il n'est pas facile d'obtenir à partir de filières circulaires ; il est possible de réaliser ces films par le procédé dit "CAST FILM" qui utilise une filière plate. Ces films peuvent servir en forte épaisseur à réaliser par exemple des conteneurs de liquide de gros volume. Mais ils peuvent servir à être complexés avec d'autres films. En effet les films selon l'invention, présentent à titre d'exemple non limitatif une imperméabilité à l'eau satisfaisante mais, en contrepartie, une imperméabilité aux gaz qui peut-être insuffisantes dans un certain nombre d'applications. Il est donc intéressant de les complexer avec d'autres films susceptibles d'apporter le complément de performance qui manque. A titre d'exemple on peut complexer un film polyamide biorienté avec un film PE/EVA selon l'invention. La liaison entre les deux films est réalisée par une couche adhésive intermédiaire de même nature que celles qui sont utilisées pour faire les complexages à partir de polyoléfines. Nous ne préciserons pas davantage la nature de ces films de liaisons qui sont disponibles sur le marché. Nous avons pris le film polyamide biorienté à titre d'exemple mais il y a une infinité de complexages possibles notamment tous ceux qui comprennent au moins un film polyoléfine pour la soudure ; plus généralement nous désignerons ci-après le film polyamide ou tout autre film associé apportant une fonction complémentaire "film barrière". On peut ainsi réaliser, par exemple, des films complexes réalisés à partir de l'assemblage de trois ou cinq films constituant trois ou cinq couches. Les films à trois couches sont constitués de la superposition dans l'ordre, d'un film barrière, d'un film de liaison et du film PE/EVA selon l'invention. Ce type de complexage permet des soudures haute fréquence sur une seule face dite côté chair et permet notamment de réaliser des sachets du type paquets de bonbons à partir d'un seul film ou bien des sachets à partir de deux films du type des dosettes contenant du café lyophilisé par exemple. Dans le cadre de ces applications, on peut espérer, par exemple, diminuer considérablement la largeur des soudures et ainsi économiser des quantités de film importantes ; il faut savoir que dans le cas de la dosette la surface nécessaire à la soudure peut approcher de la moitié de la surface de film employée. Les films à cinq couches sont composés d'un film barrière au centre, comportant de part et d'autre un film de liaison, lui même recouvert d'un film selon l'invention qui se situe donc, à l'extérieur, de part et d'autre du complexe. Ces films à cinq couches permettent les soudures haute fréquence chair contre chair ainsi que cuir contre chair sans avoir de problème de collage sur les électrodes et en résolvant des problèmes de compatibilité que ne permettaient pas l'emploi de matériaux comme le P.V.C.. Nous avons décrit ces films complexes réalisés par superposition de films préalablement extrudés individuellement, mais il est possible d'en obtenir directement par coextrusion soit en filière plate soit en filière circulaire à trois ou cinq couches organisés comme nous l'avons décrit précédemment. Il est évident que les performances de ces films ne seront pas les mêmes que celles décrites précédemment, mais cette technique qui permet d'obtenir des films moins chers, a son domaine d'application bien spécifique. Il existe en France des capacités de co-extrusion en filière plate inemployées qui pourraient ainsi servir à produire des films performants et bon marché dans la mesure où les tonnages seraient importants. En fait le complexage des films est obligatoire dans certaines applications dans lesquelles un des composants n'est pas une matière thermoplastique : on peut citer dans cet ordre d'idée, l'introduction d'un tissu par exemple ou d'un papier ou bien un film préalablement imprimé de manière à protéger par exemple l'impression par l'épaisseur d'un film transparent. Enfin, on peut se servir du matériau PE/EVA pour enduire un autre matériau, se présentant lui-même en feuille, par exemple, par simple dépôt d'un film extrudé par une filière plate. Notamment en ce qui concerne les papiers et les cartons, le remplacement du polyéthylène par le matériau PE/EVA, permet des soudures par haute fréquence à travers l'épaisseur de papier qui sont très performantes du fait que la chaleur n'a plus à traverser cette épaisseur isolante.

## Revendications

1. Film fabriqué à base de Polyéthylène et d'E.V.A. caractérisé en ce que la résine initiale, qui le constitue, contient de 8 à 18% D'E.V.A., avec un grade inférieur à 2 suivant l'échelle I-1 suivant la norme NFT 51016, contient de 5 à 30%, de la masse de résine initiale, de résine de polypropylène ou de résine de polyoléfine greffée pour permettre une réticulation, pouvant être complétée par une charge minérale neutre inférieure, en extrait sec, à 10% de la masse de résine initiale, et qu'il peut être soudé par haute fréquence par les mêmes installations qui servent à souder les films P.V.C..

2. Film fabriqué à base de Polyéthylène et d'E.V.A. suivant la revendication précédente, caractérisé en ce qu'il est extrudé sous forme de gaine qui est ensuite écrasée entre deux rouleaux de manière à ce que la présence de l'E.V.A. puisse permettre l'adhérence des parois entre elles.

3. Film fabriqué à base de Polyéthylène et d'E.V.A. suivant l'une quelconque des revendications précédentes, caractérisé en ce qu'un décor est fait par repoussage sur le film pour en diminuer la surface de contact au toucher.

4. Film fabriqué à base de Polyéthylène et d'E.V.A. suivant l'une quelconque des revendications précédentes, caractérisé en ce que le film contient environ 10% de résine de polypropylène.

5. Film fabriqué à base de Polyéthylène et d'E.V.A. suivant l'une quelconque des revendications précédentes, caractérisé en ce que le film contient environ 7% de carbonate de calcium.

6. Film fabriqué à base de Polyéthylène et d'E.V.A. suivant l'une quelconque des revendications de 1 à 4, caractérisé en ce que le film contient une charge neutre inférieure à 10% qui peut être composée soit de carbonate de calcium, soit de fibre de verre, soit de billes de verre, soit de mica, soit de talc, soit d'un mélange de tout ou partie de ces composants.

7. Film fabriqué à base de polyéthylène et d'EVA suivant l'une quelconque des revendications 1 ou 3 à 6 caractérisé en ce qu'il est obtenu à partir d'une extrudeuse munie d'une filière plate, permettant ainsi son emploi en forte épaisseur et ou dans les épaisseurs très précises nécessaires à son complexage avec d'autres films.

8. Film fabriqué à base de polyéthylène et d'EVA suivant la revendication précédente, caractérisé en ce qu'il est complexé avec des films barrière pour former des films complexes à trois ou cinq couches, et qu'il permet de les rendre soudables par haute fréquence.

9. Film à base de polyéthylène et d'EVA suivant l'une quelconque des revendications précédentes caractérisé en ce qu'il est complexé avec des films composés de matériaux non thermoplastiques.

10. Film à base de polyéthylène et d'EVA suivant la revendication précédente caractérisé en ce que le matériau non thermoplastique avec lequel il est associé est constitué d'un papier ou d'un carton.

11. film à base de polyéthylène et d'EVA suivant la première revendication caractérisé en ce qu'il est coextrudé avec d'autres matériaux thermoplastiques pour constituer des films complexes à trois ou cinq couches.

12. film à base de polyéthylène et d'EVA suivant l'une quelconque des revendications 1 à 7 caractérisé en ce qu'il est coextrudé en filière circulaires avec d'autre matériaux thermoplastiques pour constituer des films complexes à trois ou cinq couches.

13. Articles obtenus par découpe et ou soudure par haute fréquence des films, complexes ou non, fabriqués à partir de films de Polyéthylène et d'E.V.A., suivant l'une quelconque des revendications précédentes.

**Office européen des brevets**

## RAPPORT DE RECHERCHE EUROPEENNE

Numero de la demande

EP 90 42 0526

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 142 315 (W.R. GRACE)<br>* Résumé; page 4, lignes 21-25 *<br>--- | 1 | B 32 B 27/32<br>C 08 L 23/08<br>C 09 J 123/08<br>C 08 J 5/18 |
| A | FR-A-1 550 731 (NATIONAL DISTILLERS AND CHEMICAL)<br>* Résumé *<br>----- | 1 | |

**DOMAINES TECHNIQUES RECHERCHES (Int. Cl.5)**

B 32 B
C 08 L
C 08 J
C 09 J

Le présent rapport a été établi pour toutes les revendications

| Lieu de la recherche | Date d'achèvement de la recherche | Examinateur |
|---|---|---|
| LA HAYE | 20-03-1991 | GOOVAERTS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)